# EUROPÄISCHE PATENTSCHRIFT

(11) **EP 1 318 385 B1**
(45) Veröffentlichungstag und Bekanntmachung des Hinweises auf die Patenterteilung: **02.09.2009**
(21) Anmeldenummer: 02025994.1
(22) Anmeldetag: 21.11.2002
(51) Int. Cl.: G01F 1/84

(54) **Massendurchflussmessgerät und Verfahren zum Betrieb eines Massendurchflussmessgerätes**
Mass flow measuring device and method for operating a mass flow measuring device
Débitmètre massique et procédé de fonctionnement d'un débitmètre massique

(30) Priorität: 06.12.2001 DE 10159997; 10.01.2002 DE 10200768
(43) Veröffentlichungstag der Anmeldung: 11.06.2003
(73) Patentinhaber: Krohne AG, 4019 Basel (CH)
(72) Erfinder: Brockhaus, Helmut, Dipl.-Ing., 46535 Dinslaken (DE)
(74) Vertreter: Gesthuysen, von Rohr & Eggert

(56) Entgegenhaltungen:
- WO-A-01/92832
- DE-A- 4 423 168
- DE-A- 19 939 157
- US-A1- 2001 045 134

## Beschreibung

Die Erfindung betrifft ein Verfahren zum Betrieb eines Massendurchflußmeßgeräts, das nach dem Coriolis-Prinzip arbeitet und das ein Coriolis-Meßrohr, einen dem Coriolis-Meßrohr zugeordneten, das Coriolis-Meßrohr anregenden Schwingungserzeuger und einen dem Coriolis-Meßrohr zugeordneten Coriolis-Kräfte und/oder auf Coriolis-Kräften beruhende Schwingungen erfassenden Meßwertaufnehmer aufweist, wobei die in dem Massendurchflußmeßgerät verbrauchte elektrische Leistung in Abhängigkeit von der verfügbaren elektrische Leistung gesteuert wird. Die Erfindung betrifft ferner ein Massendurchflußmeßgerät, das nach dem Coriolis-Prinzip arbeitet, mit einem Coriolis-Meßrohr, einem dem Coriolis-Meßrohr zugeordneten, das Coriolis-Meßrohr anregenden Schwingungserzeuger und einem dem Coriolis-Meßrohr zugeordneten Coriolis-Kräfte und/oder auf Coriolis-Kräften beruhende Schwingungen erfassenden Meßwertaufnehmerund mit einer zur Steuerung der in dem Massendurchflußmeßgerät verbrauchten elektrischen Leistung vorgesehenen Leistungssteuereinheit.

Bekannte Massendurchflußmeßgeräte, die nach dem Coriolis-Prinzip arbeiten, weisen üblicherweise separate Schnittstellen einerseits für die Stromversorgung, also die Versorgung mit elektrischer Leistung, und andererseits für die Ausgabe des Meßsignals, also die Datenübertragung, auf. Durch diese Trennung von Stromversorgung und Datenübertragung ist die Stromversorgung von der Art der Datenübertragung praktisch völlig unabhängig, so daß die Stromversorgung jedenfalls durch die Art der Datenübertragung nicht dahingehende beschränkt wird, daß dem Massendurchflußmeßgerät nur eine beschränkte Leistung zugeführt werden kann. Bei der Wahl einer entsprechenden Stromquelle kann damit in allen Betriebsbedingungen eine hinreichende Stromversorgung des Massendurchflußmeßgeräts gewährleistet werden. Einer Unterbrechung des Betriebs des Massendurchflußmeßgerät dadurch, daß die Leistungsaufnahme seiner Komponenten die verfügbare elektrische Leistung übersteigt, wird damit vorgebeugt.

Nun besteht jedoch der Wunsch, das eingangs beschriebene gattungsgemäße Massendurchflußmeßgerät über einer Zweileiterschnittstelle zu betreiben, also über eine solche Schnittstelle über die gleichzeitig die erforderliche elektrische Leistung an das Massendurchflußmeßgerät geliefert und der Meßwert ausgegeben wird. Ein solcher Betrieb eines Massendurchflußmeßgeräts mit einer Zweileiterschnittstelle kann z. B. aus Gründen des Explosionsschutzes gewünscht sein. Über eine Zweileiterschnittstelle ist nämlich grundsätzlich ein eigensicherer Betrieb des Massendurchflußmeßgeräts möglich, also ein Betrieb, bei dem die maximale, in dem Massendurchflußmeßgerät zur Verfügung stehende Leistung derart beschränkt ist, daß kein zündfähiger Funke entstehen kann.

Bei der Verwendung einer solchen Zweileiterschnittstelle wird im allgemeinen als Meßsignal ein Stromwert zwischen 4 mA und 20 mA ausgegeben, so daß grundsätzlich maximal 4 mA an Strom für die Versorgung der Komponenten des Massendurchflußmeßgeräts zur Verfügung stehen. Der darüber hinausgehende Strom ist im allgemeinen nicht nutzbar, da bezüglich der Komponenten des Massendurchflußmeßgeräts voreingestellt sein muß, mit welcher Leistung diese betrieben werden können. Damit ist die nutzbare Leistung bei einem Massendurchflußmeßgerät, das nach dem Coriolis-Prinzip arbeitet und das über eine Zweileiterschnittstelle einerseits mit elektrischer Leistung versorgt wird und andererseits sein Meßsignal ausgibt, derart stark beschränkt, daß ein Einsatz in der Praxis stark erschwert ist.

Aus der US 2001/045.134 A ist ein Verfahren zum Betrieb eines Massendurchflußmeßgeräts und ein eben solches Massendurchflußmeßgerät bekannt, bei dem die in dem Massendurchflußmeßgerät verbrauchte elektrische Leistung in Abhängigkeit von der verfügbaren elektrischen Leistung gesteuert wird, indem in Abhängigkeit vom verfügbaren Strom - und somit in Abhängigkeit von der verfügbaren elektrischen Leistung - der Sollwert der Sensorspitzenspannung bei Überschreitung eines sich daraus ergebenden Erregerstroms herabgesetzt wird, was gleichendbedeutend mit einer Verringerung der aufgenommenen elektrischen Leistung ist, da auch der Erregerstrom herabgesetzt wird.

Aus der DE 44 23 168 A1 ist ein Coriolis-Massendurchflußmeßgerät bekannt, bei dem die von einem Anregungsleistungsgenerator zur Verfügung gestellte Anregungsleistung für das Coriolis-Meßrohr während des Betriebs einstellbar ist, so daß die Amplitude der Anregungsschwingung des Coriolis-Meßrohrs auf einen möglichst optimalen Wert einstellbar ist.

In der DE 199 39 157 A1 sind ein Verfahren zum Ansteuern eines Schwingungserzeugers, der auf ein Coriolis-Meßrohr eines Coriolis-Massendurchflußmeßgeräts einwirkt, sowie eine Versorgungsschaltung für einen solchen Schwingungserzeuger beschrieben. Dabei ist vorgesehen, daß der Schwingungserzeuger mit einem pulsbreitenmodulierten gepulsten Signal gespeist wird. Die an den Schwingungserzeuger übertragene Leistung wird also mit Hilfe einer Pulsbreitenmodulation des Antriebsignals gesteuert. Dies soll zu einer besseren Ausnutzung der für die Speisung des Schwingungserzeugers zur Verfügung stehenden Leistung führen.

Es ist die Aufgabe der Erfindung ein weiteres Verfahren zum Betrieb eines Massendurchflußmeßgeräts, das nach dem Coriolis-Prinzip arbeitet, bzw. ein solches Massendurchflußmeßgerät, das nach dem Coriolis-Prinzip arbeitet, anzugeben, das auch dann betreibbar ist, wenn die maximal verfügbare elektrischer Leistung beschränkt ist und zeitlich variiert.

Ausgehend von dem eingangs beschriebenen Verfahren zum Betrieb eines Massendurchflußmeßgeräts ist die zuvor hergeleitete und aufgezeigte Aufgabe erfindungsgemäß dadurch gelöst, daß die Abtastfrequenz eines zum Wandeln des von dem Meßwertaufnehmer her kommenden Meßsignals vorgesehenen A/D-Wandlers in Abhängigkeit von der verfügbaren elektrischen Leistung gesteuert wird. Durch die Verwendung einer geringeren Abtastfrequenz kann nämlich die in dem A/D-Wandler verbrauchte elektrische Leistung verringert werden.

Durch das erfindungsgemäße Verfahren kann also Vorsorge getroffen werden, daß die für das Massendurchflußmeßgerät, nämlich für dessen Komponenten, erforderliche elektrische Leistung die verfügbare elektrische Leistung nicht übersteigt, wobei dazu nicht ausschließlich auf den schlechtestmöglichen Fall abgestellt werden muß, in dem nur der geringstmögliche Strom verfügbar ist. Vielmehr kann durch die erfindungsgemäß vorgesehene Steuerung der in dem Massendurchflußmeßgerät aufgenommenen bzw. verbrauchten elektrischen Leistung in Abhängigkeit von der verfügbaren elektrischen Leistung praktisch jederzeit der gesamte verfügbare Strom genutzt werden.

In diesem Zusammenhang sei darauf hingewiesen, daß das erfindungsgemäße Verfahren natürlich nicht auf der - trivialen - Erkenntnis beruht, daß bei geringerer verfügbarer elektrischer Leistung auch nur eine geringere elektrische Leistung aufgenommen werden kann. Gemäß dem erfindungsgemäßen Verfahren ist nämlich vorgesehen, daß aktiv eine Steuerung der Leistungsaufnahme der Komponenten des Massendurchflußmeßgeräts erfolgt.

Eine solche bewußte Steuerung der in dem Massendurchflußmeßgerät verbrauchten elektrischen Leistung erfolgt gemäß einer bevorzugten Weiterbildung der Erfindung dadurch, daß die mittlere Schwingungsenergie des Coriolis-Meßrohrs in Abhängigkeit von der verfügbaren elektrischen Leistung gesteuert wird. Dies erfolgt gemäß einer bevorzugten Weiterbildung der Erfindung dadurch, daß der Schwingungserzeuger in Abhängigkeit von der verfügbaren elektrischen Leistung angesteuert wird, nämlich vorzugsweise bezüglich seiner Amplitude. Die gewünschte Anpassung an die verfügbare elektrische Leistung kann dadurch erreicht werden, daß der Schwingungserzeuger bei einer geringeren verfügbaren elektrischen Leistung nur mit einer geringeren Amplitude angesteuert wird. Bei geringerer verfügbarer elektrischer Leistung ist also die Schwingungsamplitude und damit die Schwingungsenergie des Coriolis-Meßrohrs verringert. Steigt die verfügbare elektrische Leistung wieder an, so kann auch ein Anstieg der Schwingungsamplitude des Coriolis-Meßrohrs erfolgen. Daß - in den Grenzen harmonischer Schwingungen - eine größere Amplitude bei der Schwingung des Coriolis-Meßrohrs einer geringeren Amplitude vorgezogen wird, erklärt sich durch das bessere Signal-zu-Rausch-Verhältnis, das man bei größeren Schwingungsamplituden des Coriolis-Meßrohrs erzielen kann.

Die mittlere Schwingungsenergie des Coriolis-Meßrohrs ist jedoch auch auf andere Weise variierbar. So kann gemäß einer anderen bevorzugten Weiterbildung der Erfindung, die alternativ oder kumulativ zu der zuvor genannten Weiterbildung zu sehen ist, vorgesehen sein, daß der Schwingungserzeuger in Abhängigkeit von der verfügbaren elektrischen Leistung zeitlich lückend angesteuert wird. Daß der Schwingungserzeuger zeitlich lückend angesteuert wird, bedeutet dabei, daß eine Ansteuerung des Schwingungserzeugers anders als im herkömmlichen Betrieb nicht mehr mit der Anregungsfrequenz erfolgt, die üblicherweise der Resonanzfrequenz des Coriolis-Meßrohrs in der Anregungsschwingung entspricht. Vielmehr wird der Schwingungserzeuger gemäß dieser bevorzugten Weiterbildung der Erfindung zwar weiterhin derart angeregt, daß die Schwingung des Coriolis-Meßrohrs mit der zuvor angesprochenen Anregungsschwingung erhalten bleibt, jedoch erfolgt in vorbestimmten Perioden dieser Schwingung keine aktive Ansteuerung des Schwingungserzeugers. Das kann z. B. bedeuten, daß der Schwingungserzeuger nur noch in Intervallen angesteuert wird, also innerhalb eines vorgestimmten Zeitraums mit der Anregungsfrequenz angesteuert wird und in darauf folgenden passiven Intervallen lediglich mit dem Coriolis-Meßrohr mitschwingt.

Für den Meßbetrieb ist es nun wesentlich, daß die Schwingung des Coriolis-Meßrohrs nicht abbricht, so daß die passiven Intervalle, in denen keine Anregung erfolgt, vorzugsweise nur so lang sind, daß die Schwingung des Coriolis-Meßrohrs aufgrund der immer vorhandenen Dämpfung nicht schon vollständig abgeklungen ist. Alternativ zu der Anregung des Coriolis-Meßrohrs in Intervallen ist es auch denkbar, das Coriolis-Meßrohr mittels des Schwingungserzeugers nur in jeder n-ten Periode der Anregungsschwingung anzuregen, wobei n eine ganze Zahl ist.

Alternativ oder kumulativ zu der Steuerung der in dem Massendurchflußmeßgerät aufgenommenen bzw. verbrauchten elektrischen Energie mittels der Schwingungsenergie des Coriolis-Meßrohrs ist es grundsätzlich möglich jede andere, elektrische Leistung aufnehmende Komponente des Massendurchflußmeßgeräts erfindungsgemäß zu steuern.

Gemäß einer bevorzugten Weiterbildung der Erfindung ist zur Steuerung der in dem Massendurchflußmeßgerät verbrauchten elektrischen Leistung eine Leistungssteuereinheit vorgesehen, wobei sich die Leistungssteuereinheit bei Unterschreitung einer vorbestimmten verfügbaren elektrischen Leistung in einen Energiesparmodus (sleep mode) versetzt. Auf diese Weise kann die in dem Massendurchflußmeßgerät aufgenommene elektrische Leistung auch durch die Komponente selbst verringert werden, die die erfindungsgemäß vorgesehene Steuerung der in dem Massendurchflußmeßgerät aufgenommenen elektrischen Leistung übernimmt.

Wie schon angesprochen, ist durch das erfindungsgemäße Verfahren eine optimale Ausnutzung der zur Verfügung stehenden elektrischen Leistung möglich. Dementsprechend ist es gemäß einer bevorzugten Weiterbildung der Erfindung vorgesehen, daß die Versorgung mit elektrischer Leistung und die Ausgabe des Meßsignals über eine Zweileiterschnittstelle erfolgt. Dabei ist es ganz besonders bevorzugt, daß das Meßsignal als Stromsignal zwischen 4 mA und 20 mA ausgegeben wird. Weiterhin ist es auch möglich, die Versorgung mit elektrischer Leistung und die Ausgabe des Meßsignals über eine Busschnittstelle erfolgen zu lassen, also z. B. über einen Foundation Field Bus oder den Profibus entsprechend IEC 31 G/89/NP bzw. IEC 61158-2.

Ist die Ausgabe des Meßsignals über eine Zweileiterschnittstelle oder über eine Busschnittstelle vorgesehen, so kann genau eine Zweileiterschnitttstelle bzw. Busschnittstelle bereitgestellt sein. Es ist jedoch ebenfalls möglich, mehrere Zweileiterschnittstellen bzw. Busschnittstellen vorzusehen, wobei dann insgesamt potentiell mehr elektrische Leistung für das Massendurchflußmeßgerät zur Verfügung steht. Die erfindungsgemäß vorgesehene Steuerung der in dem Massendurchflußmeßgerät verbrauchten elektrischen Leistung erfolgt dann in Abhängigkeit von der insgesamt über alle Zweileiterschnittstellen bzw. Busschnittstellen zur Verfügung gestellten elektrischen Leistung.

Das Massendurchflußmeßgerät, mit dem die weiter oben hergeleitete oder aufgezeigte Aufgabe gelöst ist, ist erfindungsgemäß dadurch gekennzeichnet, daß ein A/D-Wandler zum Wandeln des von dem Meßwertaufnehmer 3 her kommenden Meßsignals vorgesehen ist und mit der Leistungssteuereinheit 6 die Abtastfrequenz des A/D-Wandlers 4 steuerbar ist.

Das erfindungsgemäße Massendurchflußmeßgerät ist somit derart ausgebildet, daß es mit dem zuvor beschriebenen erfindungsgemäßen Verfahren betreibbar ist.

Alternativ oder kumulativ dazu ist es gemäß einer anderen bevorzugten Weiterbildung der Erfindung auch möglich, eine Antriebseinrichtung zur Ansteuerung des Schwingungserzeugers vorzusehen, so daß mit der Leistungssteuereinheit über die Antriebseinrichtung die Leistungsaufnahme des Schwingungserzeugers steuerbar ist.

Eine besondere Ausnutzung des erfindungsgemäßen Verfahrens schlägt sich bei dem erfindungsgemäßen Massendurchflußmeßgerät schließlich darin nieder, daß gemäß einer bevorzugten Weiterbildung der Erfindung zur Versorgung mit elektrischer Leistung und zur Ausgabe des Meßsignals wenigstens eine Zweileiterschnittstelle oder Busschnittstelle, wie oben beschrieben, vorgesehen ist.

Im einzelnen gibt es nun eine Vielzahl von Möglichkeiten, das erfindungsgemäße Verfahren bzw. das erfindungsgemäße Massendurchflußmeßgerät auszugestalten und weiterzubilden. Dazu wird auf die den unabhängigen Patentansprüchen nachgeordnete Patentansprüche sowie auf die nachfolgende detaillierte Beschreibung bevorzugter Ausführungsbeispiele der Erfindung unter Bezugnahme auf die Zeichnung verwiesen. In der Zeichnung zeigt
- Fig. 1: schematisch ein Massendurchflußmeßgerät gemäß einem ersten bevorzugten Ausführungsbeispiel der Erfindung,
- Fig. 2: schematisch ein Massendurchflußmeßgerät gemäß einem zweiten bevorzugten Ausführungsbeispiel der Erfindung, und
- Fig. 3: schematisch ein Massendurchflußmeßgerät gemäß einem dritten bevorzugten Ausführungsbeispiel der Erfindung.

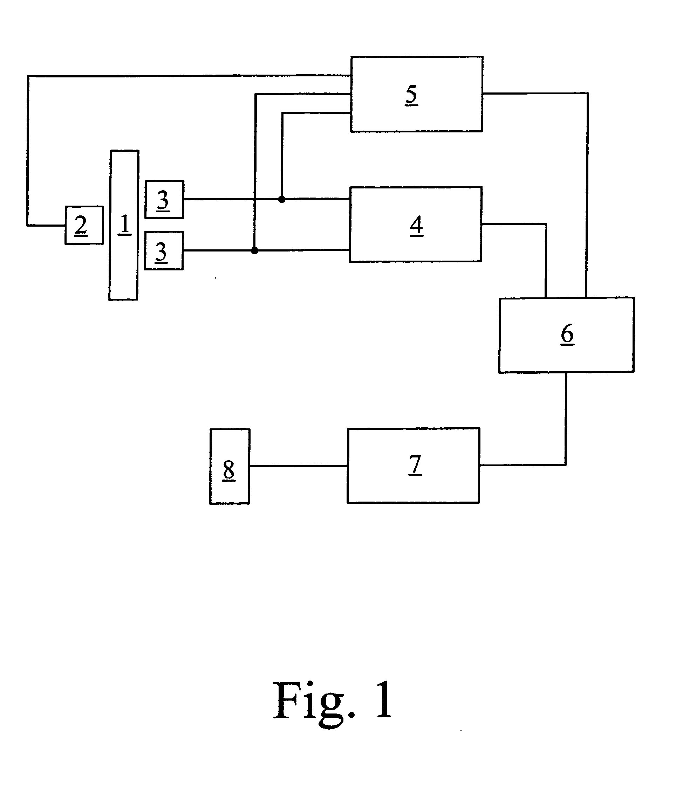

Wie aus Fig. 1 ersichtlich, weist das Massendurchflußmeßgerät gemäß dem ersten bevorzugten Ausführungsbeispiel der Erfindung ein Coriolis-Meßrohr 1 auf, dem eine Schwingungserzeuger 2 sowie zwei die Schwingungen des Coriolis-Meßrohrs 1 aufnehmende Meßwertaufnehmer 3 zugeordnet sind. Die Meßwertaufnehmer 3 sind mit einem A/D-Wandler 4 verbunden, der die von dem Meßwertaufnehmern 3 erzeugten analogen Meßsignale digitalisiert. Die Ansteuerung des Schwingungserzeugers 2 erfolgt über eine Antriebseinrichtung 5. Die Antriebseinrichtung 5 ist im übrigen auch mit den Meßwertaufnehmern 3 verbunden, so daß, wie bei Massendurchflußmeßgeräten, die nach dem Coriolis-Prinzip arbeiten, allgemein üblich, ein Einregeln auf die Resonanzfrequenz des Coriolis-Meßrohrs bezüglich der Anregungsschwingung erfolgen kann.

Bei dem in Fig. 1 dargestellten Massendurchflußmeßgerät gemäß dem ersten bevorzugten Ausführungsbeispiel der Erfindung ist nun wesentlich, daß eine Leistungssteuereinheit 6 vorgesehen ist. Diese ist mit einer zur Messung der verfügbaren elektrischen Leistung vorgesehenen Leistungsmeßeinrichtung 7 verbunden. Mit der Leistungsmeßeinrichtung 7 wird durch eine Messung des elektrischen Stromes ermittelt, welche elektrische Leistung den Komponenten des Massendurchflußmeßgeräts über eine an dem Massendurchflußmeßgerät vorgesehene Zweileiterschnittstelle 8 zur Verfügung steht, die neben der Versorgung des Massendurchflußmeßgeräts mit elektrischer Leistung auch zur Ausgabe des Meßsignals dient. Den für die verfügbare elektrische Leistung ermittelten Wert übergibt die Leistungsmeßeinrichtung 7 an die Leistungssteuereinheit 6 die ihrerseits in Abhängigkeit des für die verfügbare elektrische Leistung ermittelten Wertes eine Ansteuerung des A/D-Wandlers 4 und der Antriebseinrichtung 5 vornimmt. Dabei ist vorgesehen, daß die mittlere Schwingungsenergie des Coriolis-Meßrohrs in Abhängigkeit von der verfügbaren elektrischen Leistung gesteuert wird.

Dies erfolgt unter anderem dadurch, daß der Schwingungserzeuger 2 bezüglich seiner Amplitude über die Antriebseinrichtung 5 in Abhängigkeit von der verfügbaren elektrischen Leistung angesteuert wird. Die gewünschte Anpassung an die verfügbare elektrische Leistung wird dadurch erreicht, daß der Schwingungserzeuger 2 bei einer geringeren verfügbaren elektrischen Leistung nur mit einer geringeren Amplitude angesteuert wird. Bei geringerer verfügbarer elektrischer Leistung ist also die Schwingungsamplitude und damit die Schwingungsenergie des Coriolis-Meßrohrs 1 verringert. Steigt die verfügbare elektrische Leistung wieder an, so erfolgt über die Antriebseinrichtung 5 und den Schwingungserzeuger 2 auch eine Erhöhung der Schwingungsamplitude des Coriolis-Meßrohrs 1.

Die mittlere Schwingungsenergie des Coriolis-Meßrohrs 1 wird jedoch auch auf andere Weise variiert. So ist nämlich zusätzlich vorgesehen, daß der Schwingungserzeuger 2 in Abhängigkeit von der verfügbaren elektrischen Leistung zeitlich lückend angesteuert wird. Daß der Schwingungserzeuger 2 zeitlich lückend angesteuert wird, bedeutet, wie weiter oben schon ausgeführt, daß eine Ansteuerung des Schwingungserzeugers 2 anders als im herkömmlichen Betrieb nicht mehr mit der Anregungsfrequenz erfolgt, vorliegend nämlich mit der Resonanzfrequenz des Coriolis-Meßrohrs 1 in der Anregungsschwingung. Statt dessen wird der Schwingungserzeuger 2 zwar weiterhin derart angeregt, daß die Schwingung des Coriolis-Meßrohrs 1 mit der zuvor angesprochenen Anregungsschwingung erhalten bleibt, jedoch erfolgt in vorbestimmten Perioden dieser Schwingung keine aktive Ansteuerung des Schwingungserzeugers 2. Das bedeutet vorliegend, daß der Schwingungserzeuger 2 nur noch in Intervallen angesteuert wird, also innerhalb vorbestimmter aktiver Intervalle mit der Anregungsfrequenz angesteuert wird und in darauf folgenden passiven Intervallen lediglich mit den Coriolis-Meßrohr 1 mitschwingt. Damit die Schwingung des Coriolis-Meßrohrs 1 nicht abbricht, sind die passiven Intervalle, in denen keine Anregung erfolgt, nur so lang, daß die Schwingung des Coriolis-Meßrohrs 1 aufgrund der immer vorhandenen Dämpfung nicht schon vollständig abgeklungen ist.

Außerdem ist vorgesehen, daß bei dem A/D-Wandler 4 die Abtastfrequenz in Abhängigkeit von der verfügbaren elektrischen Leistung gesteuert wird. Durch die Verwendung einer geringeren Abtastfrequenz wird die in dem A/D-Wandler verbrauchte elektrische Leistung verringert.

Schließlich ist vorgesehen, daß die Leistungssteuereinheit 6 als Mikrocontroller ausgebildet ist. Damit ist es möglich, daß sich die Leistungssteuereinheit 6 bei Unterschreitung einer vorbestimmten verfügbaren elektrischen Leistung in einen Energiesparmodus (sleep mode) versetzt. Damit wird die in dem Massendurchflußmeßgerät aufgenommene elektrische Leistung auch durch die Komponente selbst verringert, die die Steuerung der in dem Massendurchflußmeßgerät aufgenommenen elektrischen Leistung übernimmt.

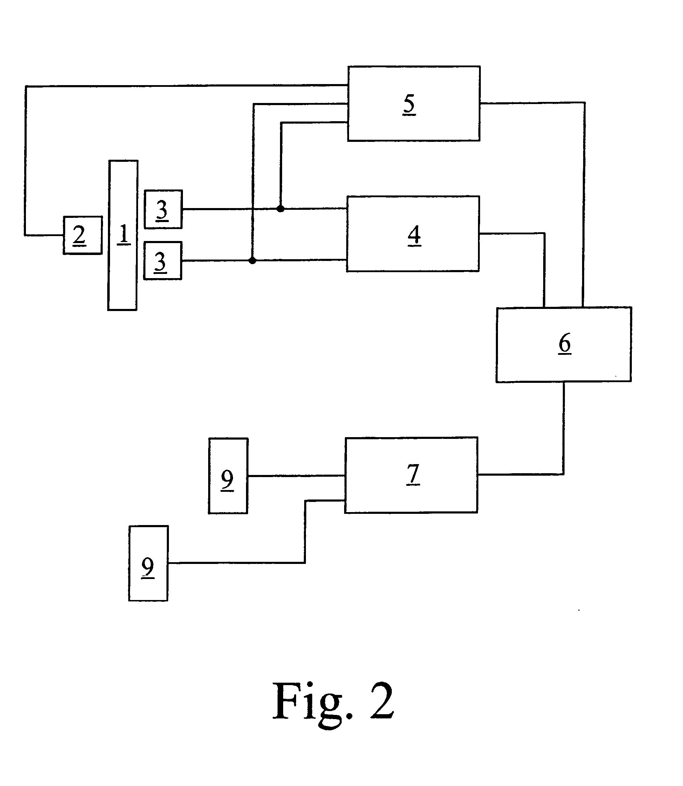

Aus Fig. 2 ist ein Massendurchflußmeßgerät gemäß einem zweiten bevorzugten Ausführungsbeispiel der Erfindung ersichtlich. Das in Fig. 2 dargestellte Massendurchflußmeßgerät entspricht in seinem Aufbau im wesentlichen dem aus Fig. 1 ersichtlichen Massendurchflußmeßgerät bis auf die Tatsache, daß anstatt einer Zweileiterschnittstelle 8 zwei Busschnittstellen 9 vorgesehen sind. Dabei werden über die beiden Busschnittstellen 9 voneinander verschiedene Meßwerte ausgegeben. Gemäß dem aus Fig. 2 ersichtlichen Massendurchflußmeßgerät gemäß dem zweiten bevorzugten Ausführungsbeispiel der Erfindung ist nämlich vorgesehen, daß über die eine Busschnittstelle 9 der Massendurchfluß durch das Coriolis-Meßrohr 1 hindurch ausgegeben wird, während über die andere Busschnittstelle 9 die von dem Massendurchflußmeßgerät ermittelte Dichte des durch das Coriolis-Meßrohr 1 fließenden Mediums ausgegeben wird. Die Versorgung mit elektrischer Energie kann wahlweise über eine oder über beide Busschnittstellen 9 erfolgen. Erfolgt die Versorgung mit elektrischer Energie über beide Busschnittstellen 9, so erfolgt die Steuerung der in dem Massendurchflußmeßgerät verbrauchten elektrischen Leistung in Abhängigkeit von der insgesamt über beide Busschnittstellen 9 zur Verfügung gestellten elektrischen Leistung. Die Steuerung der Komponenten des Massendurchflußmeßgeräts durch die Leistungssteuereinheit 6 entspricht ansonsten dem zuvor im Zusammenhang mit dem aus Fig. 1 ersichtlichen Massendurchflußmeßgerät gemäß dem ersten bevorzugten Ausführungsbeispiel der Erfindung erläuterten Steuerverfahren.

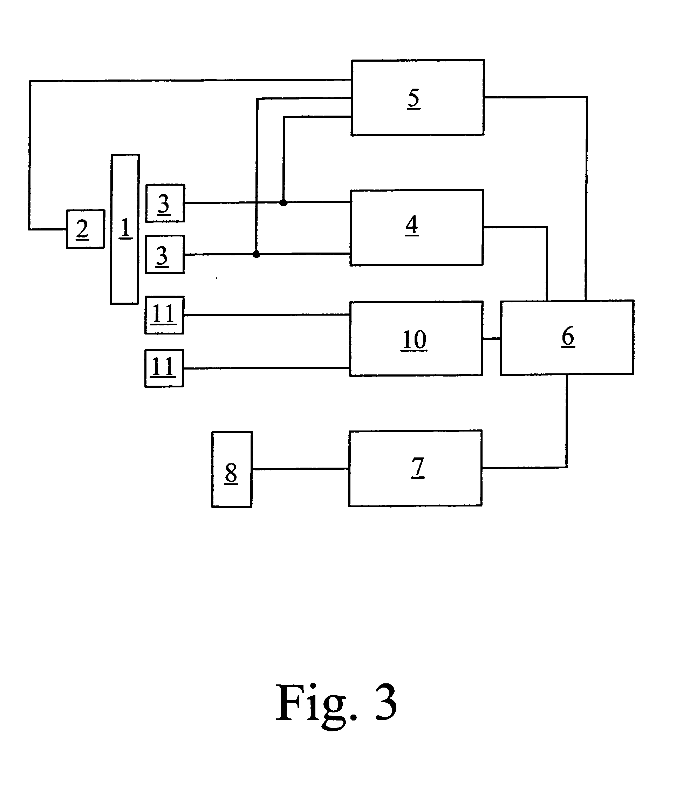

Aus Fig. 3 ist schließlich ein Massendurchflußmeßgerät gemäß einem dritten bevorzugten Ausführungsbeispiel der Erfindung ersichtlich. In Ergänzung zu dem aus Fig. 1 ersichtlichen Massendurchflußmeßgerät gemäß dem ersten bevorzugten Ausführungsbeispiel der Erfindung ist bei diesem Massendurchflußmeßgerät vorgesehen, daß über eine weitere, als Mikrocontroller ausgebildete Steuereinheit 10 zusätzliche, rein passive Ausgänge 11 angesteuert werden. Über diese passiven Ausgänge 11 erfolgt keine Stromversorgung des Massendurchflußmeßgeräts. Diese passiven Ausgänge 11 dienen lediglich der Ausgabe von Status- oder Anzeigeinformationen bzw. der Übermittlung von z. B. über eine Tastatur eingegebenen Einstellungen. Auch hier erfolgt die Steuerung der Komponenten des Massendurchflußmeßgeräts mittels der Leistungssteuereinheit 6, wie im Zusammenhang mit dem aus Fig. 1 ersichtlichen Massendurchflußmeßgerät gemäß dem ersten bevorzugten Ausführungsbeispiel der Erfindung erläutert.

## Patentansprüche

1. Verfahren zum Betrieb eines Massendurchflußmeßgeräts, das nach dem Coriolis-Prinzip arbeitet und das ein Coriolis-Meßrohr (1), einen dem Coriolis-Meßrohr (1) zugeordneten, das Coriolis-Meßrohr (1) anregenden Schwingungserzeuger (2) und einen dem Coriolis-Meßrohr (1) zugeordneten, Coriolis-Kräfte und/oder auf Coriolis-Kräften beruhende Schwingungen erfassenden Meßwertaufnehmer (3) aufweist, wobei die in dem Massendurchflußmeßgerät verbrauchte elektrische Leistung in Abhängigkeit von der verfügbaren elektrischen Leistung gesteuert wird, **dadurch gekennzeichnet, daß** die Abtastfrequenz eines zum Wandeln des von dem Meßwertaufnehmer (3) her kommenden Meßsignals vorgesehenen A/D-Wandlers (4) in Abhängigkeit von der verfügbaren elektrischen Leistung gesteuert wird.

2. Verfahren nach Anspruch 1, **dadurch gekennzeichnet, daß** die mittlere Schwingungsenergie des Coriolis-Meßrohrs (1) in Abhängigkeit von der verfügbaren elektrischen Leistung gesteuert wird.

3. Verfahren nach Anspruch 2, **dadurch gekennzeichnet, daß** der Schwingungserzeuger (2) in Abhängigkeit von der verfügbaren elektrischen Leistung angesteuert wird.

4. Verfahren nach Anspruch 3 , **dadurch gekennzeichnet, daß** der Schwingungserzeuger (2) bezüglich seiner Amplitude in Abhängigkeit von der verfügbaren elektrischen Leistung angesteuert wird.

5. Verfahren nach Anspruch 4, **dadurch gekennzeichnet, daß** bei geringerer verfügbarer elektrischer Leistung eine geringere Amplitude erzeugt wird.

6. Verfahren nach einem der Ansprüche 2 bis 5, **dadurch gekennzeichnet, daß** der Schwingungserzeuger (2) in Abhängigkeit von der verfügbaren elektrischen Leistung zeitlich lückend angesteuert wird.

7. Verfahren nach Anspruch 6, **dadurch gekennzeichnet, daß** der Schwingungserzeuger (2) in Intervallen angesteuert wird.

8. Verfahren nach einem der Ansprüche 1 bis 7, **dadurch gekennzeichnet, daß** bei geringerer verfügbarer elektrischer Leistung eine geringe Abtastfrequenz verwendet wird.

9. Verfahren nach einem der Ansprüche 1 bis 8, **dadurch gekennzeichnet, daß** zur Steuerung der in dem Massendurchflußmeßgerät verbrauchten elektrischen Leistung eine Leistungssteuereinheit (6) vorgesehen ist, wobei sich die Leistungssteuereinheit (6) bei Unterschreitung einer vorbestimmten verfügbaren elektrischen Leistung in einen Energiesparmodus versetzt.

10. Verfahren nach einem der Ansprüche 1 bis 9, **dadurch gekennzeichnet, daß** die Versorgung mit elektrischer Leistung und die Ausgabe des Meßsignals über wenigstens eine Zweileiterschnittstelle (8) erfolgt.

11. Verfahren nach Anspruch 10, **dadurch gekennzeichnet, daß** das Meßsignal als Stromsignal zwischen 4 mA und 20 mA ausgegeben wird.

12. Verfahren nach einem der Ansprüche 1 bis 11, **dadurch gekennzeichnet, daß** die Versorgung mit elektrischer Leistung und die Ausgabe des Meßsignals über wenigstens eine Busschnittstelle erfolgt.

13. Massendurchflußmeßgerät, das nach dem Coriolis-Prinzip arbeitet, mit einem Coriolis-Meßrohr (1), einem dem Coriolis-Meßrohr (1) zugeordneten, das Coriolis-Meßrohr anregenden Schwingungserzeuger (2) und einem dem Coriolis-Meßrohr zugeordneten, Coriolis-Kräfte und/oder auf Coriolis-Kräften beruhende Schwingungen erfassenden Meßwertaufnehmer (3) und mit einer zur Steuerung der in dem Massendurchflußmeßgerät verbrauchten elektrischen Leistung vorgesehenen Leistungssteuereinheit (6), **dadurch gekennzeichnet, daß** ein A/D-Wandler zum Wandeln des von dem Meßwertaufhehmer (3) her kommenden Meßsignals vorgesehen ist und mit der Leistungssteuereinheit (6) die Abtastfrequenz des A/D-Wandlers (4) steuerbar ist.

14. Massendurchflußmeßgerät nach Anspruch 13, **dadurch gekennzeichnet, daß** zur Messung der verfügbaren elektrischen Leistung eine mit der Leistungssteuereinheit (6) verbundene Leistungsmeßeinrichtung (7) vorgesehen ist.

15. Massendurchflußmeßgerät nach Anspruch 13 oder 14, **dadurch gekennzeichnet, daß** eine Antriebseinrichtung (5) zur Ansteuerung des Schwingungserzeugers (2) vorgesehen ist und mit der Leistungssteuereinheit (6) über die Antriebseinrichtung (5) die Leistungsaufnahme des Schwingungserzeugers (2) steuerbar ist.

16. Massendurchflußmeßgerät nach einem der Ansprüche 13 bis 15, **dadurch gekennzeichnet, daß** zur Versorgung mit elektrischer Leistung und zur Ausgabe des Meßsignals wenigstens eine Zweileiterschnittstelle (8) vorgesehen ist.

17. Massendurchflußmeßgerät nach Anspruch 16, **dadurch gekennzeichnet, daß** das Meßsignal als Stromsignal zwischen 4 mA und 20 mA ausgebbar ist.

18. Massendurchflußmeßgerät nach einem der Ansprüche 13 bis 15, **dadurch gekennzeichnet, daß** zur Versorgung mit elektrischer Leistung und zur Ausgabe des Meßsignals wenigstens eine Busschnittstelle (9) vorgesehen ist.

## Claims

1. Method for operating a mass flowmeter that employs the Coriolis principle and incorporates a Coriolis measuring tube (1), an oscillator (2) associated with and stimulating said Coriolis measuring tube (1), and a transducer (3) associated with said Coriolis measuring tube (1) and collecting Coriolis forces and/or oscillations based on Coriolis forces, wherein the electric power consumed in the mass flowmeter is controlled as a function of the available electric power **characterized in that** the sampling frequency of the A/D converter (4) provided for digitizing the measuring signals emanating from the transducer (3) is controlled as a function of the available electric power.

2. Method according to claim 1, **characterized in that** the mean value of the oscillatory energy of the Coriolis measuring tube (1) is controlled on the basis of the available electric power.

3. Method according to claim 2, **characterized in that** the oscillator (2) is activated as a function of the available electric power.

4. Method according to claim 3, **characterized in that** the oscillator (2) is activated with its amplitude determined by the available electric power.

5. Method according to claim 4, **characterized in that** a reduction in available electric power correspondingly reduces the amplitude generated.

6. Method according to any one of claims 2 to 5, **characterized in that**, as a function of the available electric power, the activation of the oscillator (2) takes place with time gaps.

7. Method according to claim 6, **characterized in that** the oscillator (2) is activated at time intervals.

8. Method according to any one of claims 1 to 7, **characterized in that**, in the event of reduced electric power, a lower sampling frequency is used.

9. Method according to any one of claims 1 to 8, **characterized in that**, for controlling the electric power consumed in the mass flowmeter, a power control unit (6) is provided which power control unit (6) transitions into a energy-saving mode whenever the available electric power drops below a redefined level.

10. Method according to any one of claims 1 to 9, **characterized in that** the input of electric power and the output of the measuring signal take place via at least one two-wire interface (8).

11. Method according to claim 10, **characterized in that** the output of the measuring signal is in the form of a current signal of between 4 mA and 20 mA.

12. Method according to any one of claims 1 to 11, **characterized in that**, for the supply of electric power and the output of measuring data, at least one bus-type interface is used.

13. Mass flowmeter operating by the Coriolis principle and incorporating a Coriolis measuring tube (1), an oscillator (2) associated with and stimulating said Coriolis measuring tube (1), and a transducer (3) associated with said Coriolis measuring tube and collecting Coriolis forces and/or oscillations based on Coriolis forces, wherein, for controlling the electric power consumed in the mass flowmeter, a power control unit (6) is provided **characterized in that** an A/D converter is provided for digitizing the measuring signals emanating from the transducer (3) and that the sampling frequency of the A/D converter (4) is controlled by the power control unit (6).

14. Mass flowmeter according to claim 13, **characterized in that**, for measuring the available electric power, a power measuring system (7) is connected to the power control unit (6).

15. Mass flowmeter according to claim 13 or 14, **characterized in that** a drive system (5) is provided for activating the oscillator (2) and that by means of the power control unit (6), via said drive system (5), the power consumption of the oscillator (2) can be controlled.

16. Mass flowmeter according to any one of claims 13 to 15, **characterized in that** at least one two-face port (8) is provided for the input of electric power and the output of the measuring signal.

17. Mass flowmeter according to claim 16, **characterized in that** the measuring signal can be retrieved as a current signal of between 4 mA and 20 mA.

18. Mass flowmeter according to any one of claims 13 to 15, **characterized in that** at least one bus-type interface (9) is provided for the input of electric power and the output of measuring data.

## Revendications

1. Procédé d'exploitation d'un débitmètre massique qui fonctionne selon le principe de Coriolis et qui présente un tube de mesure de Coriolis (1), un générateur d'oscillations (2) associé au tube de mesure de Coriolis (1) et qui excite le tube de mesure de Coriolis (1) ainsi qu'un enregistreur de valeur mesurée (3) associé au tube de mesure de Coriolis (1) et qui détecte les forces de Coriolis et/ou les oscillations qui se basent sur les forces de Coriolis, la puissance électrique consommée dans le débitmètre massique étant commandée en fonction de la puissance électrique disponible, **caractérisé en ce que** la fréquence d'échantillonnage d'un convertisseur A/N (4) prévu pour la conversion du signal de mesure provenant de l'enregistreur de valeur mesurée (3) est commandée en fonction de la puissance électrique disponible.

2. Procédé selon la revendication 1, **caractérisé en ce que** l'énergie d'oscillation moyenne du tube de mesure de Coriolis (1) est commandée en fonction de la puissance électrique disponible.

3. Procédé selon la revendication 2, **caractérisé en ce que** le générateur d'oscillations (2) est commandé en fonction de la puissance électrique disponible.

4. Procédé selon la revendication 3, **caractérisé en ce que** l'amplitude du générateur d'oscillations (2) est commandée en fonction de la puissance électrique disponible.

5. Procédé selon la revendication 4, **caractérisé en ce qu'**une amplitude plus faible est produite si la puissance électrique disponible est faible.

6. Procédé selon l'une des revendications 2 à 5, **caractérisé en ce que** le générateur d'oscillations (2) est commandé avec des interruptions dans le temps en fonction de la puissance électrique disponible.

7. Procédé selon la revendication 6, **caractérisé en ce que** le générateur d'oscillations (2) est commandé dans des intervalles.

8. Procédé selon l'une des revendications 1 à 7, **caractérisé en ce qu'**une fréquence d'échantillonnage réduite est utilisée si la puissance électrique disponible est faible.

9. Procédé selon l'une des revendications 1 à 8, **caractérisé en ce qu'**une unité de commande de puissance (6) est prévue pour commander la puissance électrique consommée dans le débitmètre massique, l'unité de commande de puissance (6) passant dans un mode d'économie d'énergie lorsque la puissance électrique disponible devient inférieure à une valeur prédéfinie.

10. Procédé selon l'une des revendications 1 à 9, **caractérisé en ce que** l'alimentation en puissance électrique et la délivrance du signal de mesure s'effectuent par le biais d'au moins une interface à deux conducteurs (8).

11. Procédé selon la revendication 10, **caractérisé en ce que** le signal de mesure est délivré sous la forme d'un signal de courant entre 4 mA et 20 mA.

12. Procédé selon l'une des revendications 1 à 11, **caractérisé en ce que** l'alimentation en puissance électrique et la délivrance du signal de mesure s'effectuent par le biais d'au moins une interface de bus.

13. Débitmètre massique qui fonctionne selon le principe de Coriolis et qui présente un tube de mesure de Coriolis (1), un générateur d'oscillations (2) associé au tube de mesure de Coriolis (1) et qui excite le tube de mesure de Coriolis ainsi qu'un enregistreur de valeur mesurée (3) associé au tube de mesure de Coriolis et qui détecte les forces de Coriolis et/ou les oscillations qui se basent sur les forces de Coriolis, et comprenant une unité de commande de puissance (6) prévue pour commander la puissance électrique consommée dans le débitmètre massique, **caractérisé en ce qu'**il est prévu un convertisseur A/N pour la conversion du signal de mesure provenant de l'enregistreur de valeur mesurée (3) et que la fréquence d'échantillonnage du convertisseur A/N (4) peut être commandée en fonction de la puissance électrique disponible.

14. Débitmètre massique selon la revendication 13, **caractérisé en ce qu'**il est prévu un dispositif de mesure de puissance (7) relié avec l'unité de commande de puissance (6) pour mesurer la puissance électrique disponible.

15. Débitmètre massique selon la revendication 13 ou 14, **caractérisé en ce qu'**il est prévu un dispositif d'entraînement (5) pour commander le générateur d'oscillations (2) et la puissance consommée par le générateur d'oscillations (2) peut être commandée avec l'unité de commande de puissance (6) par le biais du dispositif d'entraînement (5).

16. Débitmètre massique selon l'une des revendications 13 à 15, **caractérisé en ce qu'**il est prévu au moins une interface à deux conducteurs (8) pour l'alimentation en puissance électrique et la délivrance du signal de mesure.

17. Débitmètre massique selon la revendication 16, **caractérisé en ce** le signal de mesure peut être délivré sous la forme d'un signal de courant entre 4 mA et 20 mA.

18. Débitmètre massique selon l'une des revendications 13 à 15, **caractérisé en ce qu'**il est prévu au moins une interface de bus (9) pour l'alimentation en puissance électrique et la délivrance du signal de mesure.
